(19) **Europäisches Patentamt**

**European Patent Office**

**Office européen des brevets**

(11) Veröffentlichungsnummer : **0 307 771 B1**

(12) # EUROPÄISCHE PATENTSCHRIFT

(45) Veröffentlichungstag der Patentschrift :
03.07.91 Patentblatt 91/27

(21) Anmeldenummer : 88114567.6

(22) Anmeldetag : 07.09.88

(51) Int. Cl.⁵ : **C09C 1/00**

(54) **Glasur- und emailstabile Perlglanzpigmente.**

(30) Priorität : 17.09.87 DE 3731174

(43) Veröffentlichungstag der Anmeldung :
22.03.89 Patentblatt 89/12

(45) Bekanntmachung des Hinweises auf die
Patenterteilung :
03.07.91 Patentblatt 91/27

(84) Benannte Vertragsstaaten :
DE FR IT

(56) Entgegenhaltungen :
EP-A- 0 220 509
CHEMICAL ABSTRACTS, Band 84, Nr. 8, 23.
Februar 1976, Seite 115, Zusammenfassung
Nr. 46195e, Columbus, Ohio, US; & JP-A-75 19
127 (NIHON KOKEN KOGYO K.K.) 04-07-1975

(73) Patentinhaber : **MERCK PATENT
GESELLSCHAFT MIT BESCHRÄNKTER
HAFTUNG
Frankfurter Strasse 250 Postfach 4119
W-6100 Darmstadt (DE)**

(72) Erfinder : **Emmert, Ralf, Dr.
419 John F. Kennedy Bvd.
Bayonne N.J., 07002 (US)**

## Beschreibung

Die Erfindung betrifft glasur- und emailstabile farbige Perlglanzpigmente auf Basis von mit Metalloxiden, insbesondere Titandioxid, beschichteten und zusätzlich mit einer Deckschicht aus Zinndioxid versehenen plättchenförmigen Substraten.

Farbige Perglanzpigmente auf Basis von mit Metalloxiden beschichteten plättchenförmigen Substraten sind seit längerem bekannt. So werden – wie beispielsweise in der US 30 87 828 oder der DE 25 22 572 beschrieben – durch eine Beschichtung mit Eisen-III-Oxid bzw. Eisen-III-Oxid und Titandioxid Pigmente erhalten, die eine goldene bis rötlich-bronzene Körperfarbe aufweisen. Die Farbskala für eine Körperfarbe aufweisende Perglanzpigmente, insbesondere im Rot- bis Violettbereich, zeichnet sich durch eine nur geringe Variationsbreite aus. Zwar lassen sich noch andere rötliche Körperfarben erzielen, wenn man den Pigmenten anorganische oder organische Farbstoffe zusetzt ; derartige Pigmente sind jedoch für eine Vielzahl von Anwendungen, so z.B. für Glasuren und Emaillen, nicht geeignet.

Es bestand also ein Bedürfnis, Perglanzpigmente zu entwickeln, die einerseits durch Bereitstellung neuer dekorativer Farben die Farbskala für Farbglanzpigmente im Rot- bis Violettbereich bereichern, aber andererseits chemisch und thermisch so stabil sind, um gegebenenfalls in silikatischen Schmelzflüssen und somit für Glasuren und Emaillen verwendet werden zu können.

Das Fehlen jeglicher toxischer Bestandteile, wie z.B. Cadmium, welches für Farben oft Verwendung findet, sollte darüberhinaus auch ihre Anwendung in kosmetischen Artikeln erlauben.

Es wurde nun gefunden, daß neue farbige, insbesondere rote bis purpur-violette und für Glasuren und Emails geeignete Perlglanzpigmente auf Basis von mit Metalloxiden beschichteten und zusätzlich mit einer Deckschicht aus Zinndioxid versehenen plättchenförmigen Substraten erhalten werden können, wenn in die Zinndioxidschicht kolloidal verteiltes Gold eingelagert wird.

Glasur- und emailstabile Pigmente, die eine Außenschicht von Zinn- oder Ceroxid aufweisen, sind in der deutschen Patentanmeldung DE-OS-35 35 818 beschrieben ; jeodch sind diese Pigmente silberweiß oder erscheinen in den entsprechenden Interferenzfarben, falls sie nicht durch Zusatz von Eisenoxiden die gold-bronzenen Körperfarben erhalten. Auch die Ausfällung von kolloidalem Gold durch Zinnsalze ist im Prinzip seit langem zur Herstellung von Cassius'schem Goldpurpur bekannt (z.B. Gmelin, Handbuch d. anorg. Chemie, Bd. Au, 399-400, 1954), jedoch war es nicht vorauszusehen, daß die Einlagerung von Gold-Partikeln unter den zur Auffällung einer Zinndioxid-Schicht notwendigen Verfahrensbedingungen gelingen könnte. Auch war es nicht voraussehbar, daß dabei Pigmente erhalten werden können mit einer zur Vermittlung des typischen Perlglanzeffekts ausreichenden glatten und transparenten Oberfläche.

Gegenstand der Erfindung sind demnach Perlglanzpigmente auf Basis von mit Metalloxiden, insbesondere Titandioxid, beschichteten und zusätzlich mit einer Deckschicht aus Zinndioxid versehenen plättchenförmigen Substraten, dadurch gekennzeichnet, daß die Pigmente innerhalb der Zinndioxidschicht eine Einlagerung von kolloidalem Gold aufweisen.

Gegenstand der Erfindung ist auch ein Verfahren zur Herstellung von Perlglanzpigmenten auf Basis von mit Metalloxiden, insbesondere Titandioxid überzogenen plättchenförmigen Substraten, die eine Deckschicht aus Zinndioxid besitzen, wobei die plättchenförmigen Substrate in wäßriger Suspension zunächst mit durch Hydrolyse aus Metallsalzen gefällten Metalloxiden bzw. Oxidhydraten, insbesondere Titandioxid bzw. Titandioxidhydrat, und mit durch Hydrolyse eines Zinnsalzes gefälltem Zinndioxid bzw. Zinndioxidhydrat beschichtet und danach gegebenenfalls gewaschen, getrocknet und geglüht wird, dadurch gekennzeichnet, daß die Fällung des Zinndioxids aus dem Zinnsalz in Gegenwart eines Goldsalzes vorgenommen wird unter Bedingungen, bei denen kolloidales Gold in die Zinndioxidschicht eingelagert wird.

Schließlich ist Gegenstand der Erfindung auch die Verwendung von Perlglanzpigmenten auf Basis von mit Metalloxiden, insbesondere Titanoxid, beschichteten plättchenförmigen Substraten, die eine Deckschicht aus Zinndioxid besitzen, in das kolloidales Gold eingelagert ist, zur Pigmentierung von Glasuren, Emaillen, Kunststoffen, Druckfarben, Lacken und kosmetischen Artikeln.

Die neuen erfindungsgemäßen Pigmente weisen eine von der Schichtdicke und Herstellungsweise abhängige rötlich-purpurne bis bläulich-violette Körperfarbe mit hoher Deckkraft und bestechender Brillanz auf, wobei die Purpurfarbtöne in der Regel überwiegen. Die Körperfarbe ist dabei abhängig vom Verhältnis $Au/SnO_2$ ; die zu beobachtenden Interferenzfarben sind dagegen von der Dicke der Metalloxidschichten abhängig. Eine besonders einheitlicher satter Gesamtfarbeindruck entsteht, wenn Körper- und Interferenzfarbe übereinstimmen. Besonders günstig und farbverstärkend ist daher das Aufbringen der Gold/Zinndioxid-Schicht auf rot bis violettfarbene Interferenzpigmente.

Die neuen erfindungsgemäßen Pigmente weisen überdies die in der DE-OS 35 35 818 beschriebenen Vorteile bezüglich chemischer und thermischer Stabilität auf, so daß sie auch für Emaillen und Glasuren eingesetzt werden können, ohne an Farbkraft und Perlglanz zu verlieren.

Die Herstellung von Perlglanzpigmenten auf Basis von mit Metalloxiden, insbesondere Titandioxid beschichteten plättchenförmigen Substraten, welche als Ausgangsstoffe für die erfindungsgemäßen Pigmente dienen, ist hinreichend beschrieben worden, so z.B. in der DE-PS 20 09 566, in der DE-PS 22 14 545, in der DE-PS 25 22 572, in der DE-OS 35 28 256 oder in der DE-OS-35 35 818.

Als Substrate zur Auffällung der Metalloxidschicht sind im Prinzip alle plättchenförmigen Materialien geeignet, die mit Metalloxiden beschichtet werden können. Beispielhaft können genannt werden Glas, Glimmer, wie z.B. Muskovit, Biotit, Phlogopit und Vermiculit, synthetische Glimmer und mit Metalloxiden überzogener Glimmer.

Vorzugsweise wird Muskovit eingesetzt, wobei helle, an färbenden Metallverbindungen arme Glimmersorten bevorzugt werden. In Spezialfällen sind zur Erzielung eines bestimmten Farbcharakters jedoch auch gefärbte Glimmersorten geeignet.

Besonders vorteilhafte Pigmente erhält man auch bei Verwendung von vorher mit vorzugsweise 1-5 Gew.-% $SiO_2$, $SnO_2$, $Al_2O_3$, $TiO_2$ und/oder $Fe_2O_3$ belegtem Glimmer.

Die vorzugsweise verwendeten Glimmerschuppen haben je nach der gewünschten späteren Anwendung des Farbglanzpigmentes einen Durchmesser von etwa 2-1000 µm, vorzugsweise 5-50 µm, und eine Dicke im Bereich von etwa 0,05-1, vorzugsweise etwa 0,1 µm. Glimmer, dessen Dicke 1 µm übersteigt, ist für die Farbglanzpigmente nach der vorliegenden Erfindung nicht geeignet. Die Glimmerschuppen sollen im Hinblick auf Dicke und Durchmesser möglichst einheitlich sein. Es ist deshalb zweckmäßig, den Glimmer nach dem Spalten und Vermahlen zu klassieren.

Das mit einer Gold/Zinndioxid zu beschichtende Ausgangsmaterial wird in wäßriger Suspension vorgelegt, zweckmäßig in einer Konzentration von etwa 1-10 Gew.-%.

Die Zinnsalze, die Goldverbindungen sowie, falls notwendig, Oxidations- bzw. Reduktionsmittel werden als wäßrige Lösungen gleichmäßig mit definierter Dosiergeschwindigkeit je nach verwendeten Ausgangsmaterialien gleichzeitig oder nacheinander zugegeben.

Als Zinnsalze oder Goldverbindungen können grundsätzlich alle wasserlöslichen Salze bzw. Verbindungen eingesetzt werden. Als Zinnsalze werden vorzugsweise die Chloride oder Bromide verwendet. Das Zinn kann dabei entweder in der zwei- oder in der vierwertigen Form vorliegen. Beispiele für bevorzugte Zinnsalze sind $SnCl_2$, $SnCl_2 \times 2 H_2O$, $SnBr_2$, $SnCl_4$, $SnBr_4$ oder $SnCl_4 \times 5 H_2O$. Als Goldverbindungen werden bevorzugt Goldchlorid, Tetrachlorogoldsäure sowie die Alkalisalze der Tetrachlorogoldsäure verwendet.

Werden Zinn-II-Salze verwendet, so ist in der Regel die Anwesenheit von zusätzlichen Oxidationsmitteln erforderlich. Prinzipiell sind alle Oxidationsmittel einsetzbar, die in Wasser ohne Zersetzung löslich sind. Beispielhaft können Wasserstoffperoxid oder Kaliumchlorat genannt werden ; vorzugsweise wird $KClO_3$ verwendet.

Der Gehalt an kolloidalem Gold, entstanden durch Reduktion entsprechender Goldverbindungen variiert erfindungsgemäß zwischen 0,1 und 15%, vorzugsweise zwischen 5 und 10%, bezogen auf die Zinndioxidschicht.

Geht man bei der Herstellung der erfindungsgemäßen Gold/Zinndioxid-Schicht von vierwertigen Zinnverbindungen aus, so sind in der Regel zusätzliche Reduktionsmittel erforderlich, um aus den Goldverbindungen elementares Gold auszuscheiden. Generell sind alle in wäßrigen Medien wirksamen Reduktionsmittel geeignet. Beispielsweise können Wasserstoff, Hydrazin, Hydroxylamin, schwefelige Säure oder organische Reduktionsmittel wie Form- oder Acetaldehyd, Traubenzucker, etherische Öle (als Emulsion) oder Oxalsäure Verwendung finden. Bevorzugt werden Hydrazin oder dessen Salze eingesetzt.

Allgemein sind bezüglich des Oxidations-/Reduktionsverhaltens ähnliche Versuchsbedingungen einzuhalten, wie sie in der Literatur zur Herstellung bekannter Goldpurpure beschrieben sind (z.B. Gmelin, Handbuch d. anorg. Chemie, Bd. Au, 399-400, (1954)).

In allen Fällen ist es zweckmäßig, getrennte Lösungen von Zinn- und Goldverbindungen und Reduktions- bzw. Oxidationsmitteln bereitzustellen.

Bei Verwendung von Zinn-II-Salzen können die Lösungen von Zinn-II-Salz, der Goldverbindung und des Oxidationsmittels im Prinzip gleichzeitig zu der wäßrigen Suspension des zu beschichtenden Ausgangspigmentes zudosiert werden.

Besonders vorteilhafte Pigmente erhält man jedoch, wenn man zunächst die Zinn-II-Salz-Lösung und die das Oxidationsmittel enthaltende Lösung gleichzeitig zudosiert, so daß sich eine dünne Deckschicht aus Zinndioxid ausbilden kann. Danach wird die Lösung des Oxidationsmittels durch die Gold-Lösung ersetzt, worauf kolloidal ausgefälltes Gold in die sich weiter verstärkende Zinndioxidschicht eingelagert wird. Abschließend wird die goldhaltige Lösung wieder durch das Oxidationsmittel ersetzt, um so eine abschließende dünne Deckschicht aus Zinndioxid zu erhalten.

Nach dem Glühen enthält das Endprodukt eine einheitliche Zinndioxidschicht mit darin homogen verteiltem kolloidalem Gold.

Bei Verwendung von Zinn-IV-Salzen müssen die Lösungen von Reduktionsmittel und Goldverbindung in der Regel gleichzeitig, aber getrennt zudosiert werden. Auch hier ist es vorteilhaft, zunächst eine dünne Deckschicht von Zinndioxid durch vorangehende Zugabe des gelösten Zinn-IV-Salzes zu erzeugen.

Die Metalloxide sollen auf der Substratoberfläche niedergeschlagen werden, ohne daß Nebenfällungen auftreten. Vorzugsweise erreicht man dies, indem man die Zuflußgeschwindigkeit so regelt, daß etwa 0,01-25 × 10⁻⁵ mol Metallionen pro Minute und pro Quadratmeter der zu beschichtenden Oberfläche zugeführt werden.

Gleichzeitig mit der oder den Metallsalzlösung(en) wird eine Base, vorzugsweise eine wäßrige 0,025-10 molare Alkali- bzw. Ammoniumhydroxydlösung oder auch eine äquivalente Menge gasförmigen Ammoniaks eingeführt. Als Alkalihydroxide kommen im wesentlichen Natrium- und Kaliumhydroxid in Frage. Die Zuführung der Base wird dabei so gesteuert, daß stets im wesentlichen der pH-Wert gehalten wird, der zu Beginn der Belegung im Bereich von pH 1-7 gewählt worden ist. Besonders bevorzugt ist ein konstanter pH-Wert-Bereich von 2-4. Der relativ niedrige pH-Wert von 2-4 zur Erzeugung besonders vorteilhafter Pigmente ist als überraschend anzusehen, da die in der Literatur beschriebenen Ausfällungen von elementarem Gold durch Zinnsalze zur Herstellung von Goldpurpuren nur in schwach sauren Lösungen (pH 5-7) zufriedenstellend gelingen.

Um den pH-Wert konstant zu halten, kann man auch Puffersysteme hinzufügen, wie z.B. Phosphatpuffer. Diese können entweder in der Glimmerschuppensuspension vorgelegt oder vorteilhafter mit der Alkali- oder Ammoniumhydroxydlösung zugefügt werden. In vielen Fällen ist aber das Hinzufügen weiterer Fremdionen nicht erwünscht, so daß man vorzieht, den gewünschten pH-Wert durch genaue Eindosierung von Base konstant zu halten.

Die Belegungsdauer kann weitgehend variiert werden. Sie ist im wesentlichen abhängig von der Konzentration der zugeführten Metallsalzlösung, der Oberfläche der zu belegenden Substrate und der gewünschten Dicke der SnO₂-Schicht. In der Regel ist die Belegung nach etwa 1 bis 24 Stunden abgeschlossen.

Auch die Temperatur bei der Fällung kann relativ frei zwischen Gefrier- und Siedepunkt der Suspension gewählt werden. Bevorzugt werden leicht erhöhte Temperaturen, insbesondere solche von etwa 50-100°C.

Das nach dem erfingungsgemäßen Verfahren erhaltene Farbglanzpigment kann nach allen üblichen Methoden aus dem Reaktionsgemisch isoliert und aufgearbeitet werden. Vorteilhaft wird es noch 1/2-4 Stunden unter Rühren in der Suspension bei etwa 50-100°C nachgetempert. Anschließend wird das Pigment zweckmäßig gewaschen, gegebenenfalls unter vorheriger Einstellung des pH-Wertes auf 5-7. Das Trocknen erfolgt in an sich üblicher Weise bei Temperaturen von etwa 90° bis 150°C.

Die Gesamtschichtdicke aller auf das Substrat aufgefällten Schichten bewegt sich, je nach dem gewünschten Farbton, vorzugsweise zwischen etwa 30 und 180 nm. Mit zunehmender Schichtdicke geht bekanntlich die Interferenzfarbe kontinuierlich von Blaugrau über Silber, Gold, Orange, Rot, Violett und Blau in Grün über. Anschließend erhält man Interferenzfarben höherer Ordnung. Bevorzugt sind Schichtdicken im Bereich zwischen 30 und 180 nm, da sie Interferenzfarben erster Ordnung entsprechen. Hierunter sind wiederum solche bevorzugt, die eine rote bis violette Interferenzfarbe erzeugen, da diese die durch die Goldeinlagerung erzeugte Körperfarbe unterstützen bzw. verstärken.

Die erhaltenen Pigmente können durch Kalzinieren bei Temperaturen von 700-1100°C, vorzugsweise 900-1000°C, in an sich bekannter Weise stabilisiert werden.

Nach dem Kalzinieren, bei dem die aufgefällten Metalloxidschichten weitgehend entwässert werden, erhält man Pigmente, deren Gehalt an Zinndioxid mit eingelagertem Gold 5 bis 30% des Gesamtpigmentgewichts ausmacht, vorzugsweise etwa 8 bis 18%.

Es ist weiterhin prinzipiell möglich, die Pigmente einer Nachbeschichtung oder Nachbehandlung zu unterziehen, die die Licht-, Wetter- und chemische Stabilität weiter erhöht oder die Handhabung des Pigments, insbesondere die Einarbeitung in unterschiedliche Medien, erleichtert. Als Nachbeschichtung bzw. Nachbehandlung kommen die hierfür üblichen Methoden in Frage (z.B. in DE-PS 22 15 191, DE-OS 31 51 354, DE-OS 32 35 017 oder DE-OS 33 34 598). Aufgrund der bereits ohne diese zusätzlichen Maßnahmen sehr guten Eigenschaften der erfindungsgemäßen Pigmente machen diese gegebenenfalls noch aufgebrachten Stoffe nur etwa 0-5, insbesondere 0-3 Gew.-%, des gesamten Pigments aus.

Die neuen Pigmente eignen sich für alle üblichen Anwendungen. Hauptsächlich werden sie zum Anfärben von z.B. Kunststoffen, kosmetischen Artikeln, Glas, Keramik, Lacken, Farben, insbesondere Druckfarben sowie Kautschuk und Gummiwaren eingesetzt. Sie eignen sich wegen ihrer Temperaturbeständigkeit insbesondere für Einbrennlacke, zum Färben von Schmelzflüssen, von Glas und von keramischem Material, das gebrannt wird. In der Regel werden die Pigmente in Mengen bis zu 30%, vorzugsweise 0,5-10%, eingesetzt.

Als Fritten bei der Herstellung von Glasuren oder Emaillen werden silikatische Schmelzflüsse üblicher Zusammensetzung und Eigenschaften (z.B. Winnacker-Küchler, Chemische Technologie Bd. 2, Anorg. Technologie II, Carl-Hanser-Verlag, München, 1959) verwendet, vorzugsweise Fritten, deren Schmelzbereich zwischen 500 und 1100°C liegt.

Beispiele :

Beispiel 1

In einer Suspension von 100 g eines nach der DE-PS-25 22 572 hergestellten, silberweißen Titandioxidglimmerpigments in Rutilmodifikation mit einer Partikelgrößenverteilung von 10-100 µm in 2000 ml Wasser werden unter ständigem Rühren gleichzeitig eine Lösung von 15 g SnCl$_2$ × 2H$_2$O in 470 ml 5%iger Salzsäure und eine Lösung von 3,5 g KClO$_3$ in 470 ml Wasser mit einer Dosiergeschwindigkeit von 2 ml/min hinzugeben. Der pH-Wert wird durch Zugabe von 30%iger Natronlauge konstant bei 2,0 gehalten. Nach Zugabe von 390 ml der Kaliumchlorat-Lösung wird diese durch eine Lösung von 2 g H (AuCl$_4$) × 3 H$_2$O in 50 ml Wasser ersetzt, während die Zinn-II-chlorid-Lösung weiter zugetropft wird. Nachdem die Tetrachlorogoldsäure-Lösung vollständig hinzugeben wurde, werden die restlichen 240 ml der Kaliumchlorat-Lösung zudosiert. Nach halbstündigem Nachrühren läßt man das Pigment absitzen, trennt es ab, wäscht mit destilliertem Wasser, trocknet bei 100°C und glüht abschließend eine halbe Stunde bei 800°C. Die Zinndioxid-Schicht enthält 9% Gold.

## Beispiel 2

Entsprechend Beispiel 1 werden 100 g eines nach der DE-PS-2522572 hergestellten silberweißen Titandioxidglimmerpigments in Rutilmodifikation mit einer Partikelgrößenverteilung von 10-60 µm unter Verwendung von 25 g SnCl$_2$ × 2H$_2$O in 780 ml 5%iger Salzsäure, 5,7 g KClO$_3$ in 780 ml Wasser und 3 g H(AuCl$_4$) × 3 H$_2$O in 50 ml Wasser mit einer Zinndioxidschicht, in der kolloidales Gold eingelagert ist, belegt, wobei alle drei Lösungen gleichzeitig, aber getrennt zudosiert werden. Das so erhaltene Pigment wird in üblicher Wiese abgetrennt, gewaschen, getrocknet und geglüht. Die Zinndioxid-Schicht enhält 8,2% Gold, das Pigment weist eine rote Körperfarbe auf.

## Beispiel 3

Analog Beispiel 1 wird ein Perlglanzpigment mit einer kolloidales Gold enthaltenden Zinndioxid-Deckschicht hergestellt, wobei die Kaliumchlorat-Lösung durch 10 g einer 30%igen Wasserstoffperoxidlösung ersetzt wird. Man erhält ein leuchtend rotfarbenes Pigment mit einem Goldgehalt von 9% in der SnO$_2$-Schicht.

## Beispiel 4

Zu einer Suspension von 100 g eines nach der DE-PS-25 22 572 hergestellten silberweißen Titandioxid-Glimmerpigments in Rutilmodifikation und einer Partikelgrößenverteilung von 10-100 µm in 2000 ml Wasser wird unter ständigem Rühren eine Lösung von 23,3 g SnCl$_4$ × 5 H$_2$O in 500 ml 10%iger Salzsäure mit einer Dosiergeschwindigkeit von 2 ml/min hinzugetropft. Der pH-Wert wird durch Angabe von 30%iger Natronlauge konstant bei 2,0 gehalten. Nach Zugabe von etwa einem Drittel der Zinn-IV-chlorid-Lösung werden zusätzlich gleichzeitig, aber getrennt Lösungen von 0,6 g Hydraziniumhydroxid in 700 ml Wasser mit einer Dosiergeschwindigkeit von 6 ml/min und 3,1 g H(AuCl$_4$) · xH$_2$O in 50 ml Wasser zugetropft. Nach beendeter Zugabe der Lösungen von Reduktionsmittel und Goldlösung wird die restliche Zinn-IV-chlorid-Lösung zudosiert. Nach kurzem Nachrühren läßt man das Pigment absitzen, trennt es ab, wäscht mit Wasser, trocknet bei 100 bis 120°C und glüht es bei 800°C. Das erhaltene Pigment weist eine rote Körperfarbe auf und enthält 13% Gold in der SnO$_2$-Schicht.

## Beispie 5

Analog Beispiel 1 wird ein Perlglanzpigment mit einer kolloidales Gold enthaltenden Zinndioxid-Deckschicht hergestellt, wobei das als Ausgangspigment dienende silberweiße Titandioxidglimmerpigment durch ein entsprechendes Interferenzpigment mit roter Interferenz ersetzt wird. Man erhält ein tiefrotes Pigment mit einem Goldgehalt von 9%.

## Ansprüche

1. Perlglanzpigmente auf Basis von mit Metalloxiden, insbesondere Titandioxid, beschichteten und zusätzlich mit einer Deckschicht aus Zinndioxid versehenen plättchenförmigen Substraten, dadurch gekennzeichnet, daß die Pigmente innerhalb der Zinndioxidschicht eine Einlagerung von kolloidalem Gold aufweisen.

2. Perlglanzpigmente nach Anspruch 1, dadurch zeichnet, daß der Gehalt an kolloidalem Gold, bezogen auf die Zinndioxidschicht, 0,1-15% beträgt.

3. Verfahren zur Herstellung von Perlglanzpigmenten auf Basis von mit Metalloxiden, insbesondere Titandioxid, überzogenen plättchenförmigen Substraten, die eine Deckschicht aus Zinndioxid besitzen, wobei die plättchenförmigen Substrate in wäßriger Suspension zunächst mit durch Hydrolyse aus Metallsalzen gefällten Metalloxiden bzw. Oxidhydraten, insbesondere Titandioxid bzw. Titandioxidhydrat, und mit durch Hydrolyse eines Zinnsalzes gefälltem Zinndioxid bzw. Zinndioxidhydrat beschichtet und danach ggf. gewaschen, getrocknet und geglüht wird, dadurch gekennzeichnet, daß die Fällung des Zinndioxids aus dem Zinnsalz in Gegenwart eines Goldsalzes vorgenommen wird unter Bedingungen, bei denen kolloidales Gold in die Zinndioxidschicht eingelagert wird.

4. Verfahren nach Anspruch 3, dadurch gekennzeichnet, daß die Fällung der Zinndioxid-Gold-Schicht aus Zinn-(II)-Salz-Lösungen in Gegenwart eines Oxidationsmittels erfolgt.

5. Verfahren nach Anspruch 3, dadurch gekennzeichnet, daß die Fällung der Zinndioxid-Gold-Schicht aus Zinn-(IV)-Salz-Lösungen in Gegenwart eines Reduktionsmittels erfolgt.

6. Verfahren nach einem der Ansprüche 3 bis 5, dadurch gekennzeichnet, daß die Fällung der Zinndioxid-Goldschicht bei weitgehend konstant gehaltenem pH-Wert in einem Bereich von 1 bis 7 durchgeführt wird.

7. Verwendung von Perlglanzpigmenten auf Basis von mit Metalloxiden, insbesondere Titandioxid, beschichteten plättchenförmigen Substraten, die eine Deckschicht von Zinndioxid besitzen, in das kolloidales Gold eingelagert ist, zur Pigmentierung von Glasuren, Emaillen, Kunststoffen, Druckfarben, Lacken und kosmetischen Artikeln.

## Claims

1. Nacreous pigments based on plate-like substrates coated with metal oxides, in particular titanium dioxide, and additionally provided with a top layer of tin dioxide, characterised in that the pigments have colloidal gold incorporated in the tin dioxide layer.

2. Nacreous pigments according to Claim 1, characterised in that the colloidal gold content, relative to the tin dioxide layer, is 0.1-15%.

3. Process for the preparation of nacreous pigments based on plate-like substrates coated with metal oxides, in particular titanium dioxide, and having a top layer of tin dioxide, in which the plate-like substrates are coated in aqueous suspension first with metal oxides or hydrated oxides, in particular titanium dioxide or titanium hydrated dioxide, precipitated from metal salts by hydrolysis, and with tin dioxide or tin hydrated dioxide precipitated by hydrolysis of a tin salt, and are then, if desired, washed, dried and ignited, characterised in that the precipitation of tin dioxide from the tin salt is carried out in the presence of a gold salt under conditions under which colloidal gold is incorporated in the tin dioxide layer.

4. Process according to Claim 3, characterised in that the precipitation of the tin dioxide/gold layer from tin (II) salt solutions is carried out in the presence of an oxidising agent.

5. Process according to Claim 3, characterised in that the precipitation of the tin dioxide/gold layer from tin (IV) salt solutions is carried out in the presence of a reducing agent.

6. Process according to one of Claims 3 to 5, characterised in that the precipitation of the tin dioxide/gold layer is carried out at a pH which is essentially kept constant in the range of 1 to 7.

7. Use of nacreous pigments based on plate-like substrates coated with metal oxides, in particular titanium dioxide, which have a top layer of tin dioxide in which colloidal gold is incorporated, for the pigmenting of glazes, enamels, plastics, printing inks, paints and cosmetic articles.

## Revendications

1. Pigments nacrés à base de substrats en paillettes revêtues d'oxydes métalliques, notamment du dioxyde de titane et munies en plus d'une couche de couverture en dioxyde d'étain, caractérisés en ce que les pigments possèdent à l'intérieur de la couche de dioxyde d'étain une inclusion d'or colloïdal.

2. Pigments nacrés selon la revendication 1, caractérisés en ce que la teneur en or colloïdal, par rapport à la couche de dioxyde d'étain est de 0,1-15%.

3. Procédé de préparation de pigments nacrés à base de substrats en paillettes revêtues d'oxydes métalliques, notamment du dioxyde de titane, qui possèdent une couche de couverture en dioxyde d'étain, en revêtant le substrat en paillettes dans une suspension aqueuse d'abord par des oxydes métalliques ou hydrates d'oxydes précipités par hydrolyse à partir de sels métalliques, notamment le dioxyde de titane ou l'hydrate de dioxyde de titane, et par du dioxyde d'étain ou hydrate de dioxyde d'étain, précipité par hydrolyse d'un sel d'étain et ensuite, le cas échéant, en lavant, séchant et calcinant, caractérisé en ce qu'on réalise la précipitation du dioxyde d'étain à partir du sel d'étain en présence d'un sel d'or dans des conditions où l'on incorpore de l'or colloïdal dans la couche de dioxyde d'étain.

4. Procédé selon la revendication 3, caractérisé en ce qu'on réalise la précipitation de la couche dioxyde d'étain-or à partir de solutions de sel d'étain (II) en présence d'un oxydant.

5. Procédé selon la revendication 3, caractérisé en ce qu'on réalise la précipitation de la couche dioxyde d'étain-or à partir de solutions de sel d'étain (IV) en présence d'un réducteur.

6. Procédé selon l'une des revendications 3 à 5, caractérisé en ce qu'on réalise la précipitation de la couche dioxyde d'étain-or en maintenant largement constant le pH dans un intervalle de 1 à 7.

7. Utilisation de pigments nacrés à base de substrats en paillettes revêtues d'oxydes métalliques, notamment de dioxyde de titane, qui possèdent une couche de couverture en dioxyde d'étain, dans laquelle est incorporé l'or colloïdal, pour pigmenter des glaçures, émaux, matières plastiques, encres, peintures et articles cosmétiques.